# EUROPEAN PATENT SPECIFICATION

(11) **EP 0 388 207 B1**
(45) Date of publication and mention of the grant of the patent: **18.05.1994**
(21) Application number: 90302810.8
(22) Date of filing: 15.03.1990
(51) Int. Cl.: F16H 1/28

(54) **Transmission apparatus**
Getriebevorrichtung
Dispositif de transmission

(30) Priority: 15.03.1989 JP 63327/89
(43) Date of publication of application: 19.09.1990
(73) Proprietor: KABUSHIKI KAISHA TOSHIBA, Kawasaki-shi, Kanagawa-ken 210 (JP)
(72) Inventor: Hattori, Hitoshi, c/o Intellectual Property Div., Minato-ku, Tokyo 105 (JP)
(74) Representative: Freed, Arthur Woolf

(56) References cited:
- EP-A- 0 255 323
- EP-A- 0 274 089
- DE-A- 1 650 716
- FR-A- 1 073 135
- US-A- 1 432 090
- US-A- 3 675 510
- PATENT ABSTRACTS OF JAPAN vol. 9, no. 316 (M-438)(2039) 12 December 1985,& JP-A-60 151152 (NIHON PURASUTO K.K.) 09 August 1985,

## Description

This invention relates to a transmission apparatus for reducing or increasing rotational speeds, and more particularly, to a transmission apparatus using a planetary gear mechanism and in which the input and put rotation transmitting members are freely arranged and supported and the lubrication of the interior is ensured.

Transmission apparatuses are used to reduce or increase the rotational speeds of power sources, for example, motors or engines. One type of the transmission apparatus uses a planetary gear mechanism and it has the features that it can be miniaturized and provides a large reduction ratio or a large speed up ratio. With this conventional apparatus of this type, however, the input shaft and the output shaft project from the respective ends of the apparatus case, i.e., the apparatus main body.

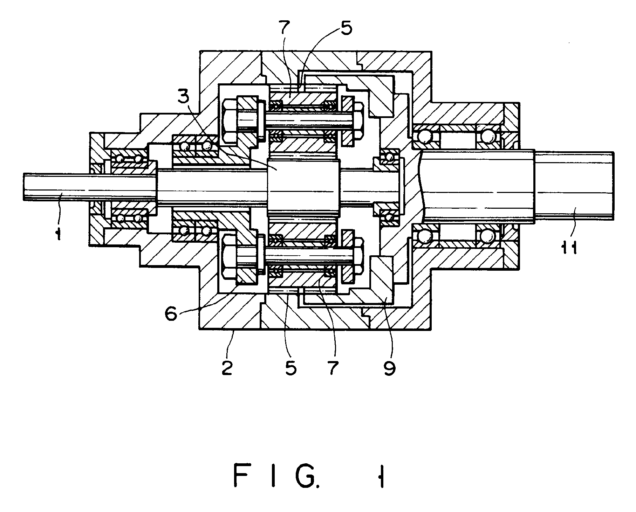

In Fig. 1 is shown an example of the conventional transmission apparatus which employs a planetary gear mechanism. An input shaft 1 which is a high speed shaft penetrates one end wall of a cylindrical case, that is, an apparatus main body 2 and is supported thereby. A sun gear 3 is fixed to the input shaft 1. A fixed internal gear 5 is also secured to the inner wall of the main body 1. Between the fixed internal gear 5 and the sun gear 3 are arranged a plurality of planetary gears 7 rotatably held by a rotary carrier 6 so as to rotate around the central axis of the sun gear 3 and their own axes. A rotary internal gear 9 is provided adjacent to and coaxial with the fixed internal gear 5. An output shaft 11 as a low speed shaft is connected to the rotary internal gear 9 and penetrates the other end wall of the main body 2 to be supported thereby. The planetary gears 7 are in mesh with the sun gear 3, the fixed internal gear 5 and the rotary internal gear 9. The gear mechanism used in the apparatus is a planetary gear mechanism known as Ferguson's mechanical paradox which has the feature that a large reduction ratio is obtained only by this single gear mechanism.

The transmission apparatus has the input shaft 1 connected to a power source such as a motor and the output 11 is fixed to a load apparatus.

A planetary transmission apparatus of this kind is disclosed in US-A-1,432,090. This apparatus has a main body, a fixed and a rotary internal gear each mounted on a common axis and each having a different number of teeth, and planetary gears engaging both the fixed and the rotary internal gear. The planetary gears are supported for rotation by a carrier and driven by a high speed shaft, projecting from one end of the main body, connected to power source eg. motor. A low speed shaft projecting from the other end of the main body transmits rotation of the rotary internal gear to a load.

Since both these prior art apparatuses have a high speed shaft projecting from one end of the main body and a low speed shaft projecting from the other end the positions at which a motor and a load apparatus are located are restricted. When, in general, the conventional transmission apparatus is used, the motor, the transmission apparatus and the load are arranged in series, causing the inconvenience that the overall arrangement is bulky.

Further, with these prior art transmission apparatuses the input shaft and the output shaft are each supported only at one end, like cantilevers. This is disadvantageous when radial loads are applied. Particularly, since large radial loads are applied to the output shaft, that is, the low speed shaft in most cases, the supporting structure of the low speed shaft specially undergoes a structural disadvantage. In addition, due to the rotation of the planetary gears and the carrier at a high speed, lubricant is scattered outward by the centrifugal force and is further moved outward through a space between the fixed internal gear and the rotary internal gear, causing an adverse, insufficient lubrication of the inner gears.

Further, it is difficult to provide a third shaft for driving a device such as a cooling fan, other than the input and output shafts in this transmission apparatus.

Accordingly, this invention provides a transmission apparatus which overcomes the abovementioned disadvantages and provides a large freedom of design such as the arrangement of the shafts and the selection of the supporting means and ensures internal lubrication.

The invention was made to solve the abovementioned problems.

According to a first aspect of the present invention, there is provided a transmission apparatus comprising: a main body, a fixed internal gear fixed to the main body; a rotary internal gear provided coaxially with and adjacent to the fixed internal gear, the rotary internal gear and the fixed internal gear having a different number of teeth, and the rotary internal gear being supported so as to rotate around a central axis thereof which is coaxial with a central axis of the fixed internal gear; planetary gears engaging the fixed internal gear and the rotary internal gear;
and a hollow carrier for holding the planetary gears so as to rotate around the central axis of the fixed internal gear, their own axes being supported so as to rotate around a central axis thereof which is coaxial with the axes of the fixed internal gear and the rotary internal gear;
characterised in that:
a hollow high speed shaft is provided for transmitting rotation of the carrier, the high speed shaft being coaxial with the carrier and being coupled thereto so as to project from one side thereof, and
a low speed shaft for transmitting rotation of the rotary internal gear is provided coaxially therewith so as to penetrate the hollow carrier and the hollow high speed shaft and project from both end portions of the main body; and in that
the transmission apparatus further comprises an electric rotary machine adjacent to and coaxial with the carrier, the rotary machine including a rotor attached to the high speed shaft and a stator attached to the main body.

In this arrangement both the carrier and the high speed shaft are hollow. The low speed shaft can penetrate the hollow carrier and project from both ends of the main body. This provides the advantage that the low speed shaft is supported at both ends by the main body and the distance between the bearings of the shaft is increased, giving structural advantages.

If a sun gear and a sun gear shaft as a third shaft are arranged at the central portion of the carrier, a fan or the like can be driven by the third shaft.

According to a second aspect of the present invention there is provided a transmission apparatus comprising: a main body; a fixed internal gear fixed to the main body, a rotary internal gear provided coaxially with and adjacent to the fixed internal gear, the rotary internal gear and the fixed internal gear having a different number of teeth, planetary gears engaging the fixed internal gear and the rotary internal gear,
the rotary internal gear being supported so as to rotate around a central axis thereof which is coaxial with a central axis of the fixed internal gear;
a carrier for holding the planetary gears so as to rotate around the central axis of the fixed internal gear and their own axes being supported so as to rotate around a central axis thereof which is coaxial with the axes of the fixed internal gear and the rotary internal gear;
the arrangement being such that a space which is continuous in a circumferential direction is formed between facing end faces of the fixed internal gear and the rotary internal gear characterised in that;
flange-like high rotational speed transmitting members for transmitting rotation of the carrier are provided and extend radially outwardly from an outer peripheral surface of the carrier to radially outwards of the fixed internal gear and the rotary internal gear through the space;
a low rotational speed transmitting member is provided for transmitting rotation of the rotary internal gear; and in that
the transmission apparatus further comprises an electric rotary machine which is coaxial with and surrounds the fixed internal gear and the rotary internal gear, the rotary machine including a rotor attached to the high rotational speed transmitting members and a stator attached to the main body.

Since the flange-like members extend outwards of the fixed and rotary internal gears, a motor can be disposed coaxially outside the gear mechanism and connected to the flange-like members. In this way the overall size of the apparatus can be reduced and the diameter and torgque of the motor can be increased.

Preferably, the apparatus also includes rotary seal members which surround the fixed internal gear and the rotary internal gear and rotate around central axes thereof coaxial with central axes of the fixed internal gear and the rotary internal gear.

The rotary seal members prevent lubricant from flowing out through the space between the fixed and rotary internal gears. This ensures internal lubrication and allows free design of the lubricating system.

Preferably, the inner peripheral faces of the rotary seal members face outer peripheral surfaces of the fixed internal gear and the rotary internal gear at a slight spacing so as not to contact each other, the inner peripheral faces of the rotary seal members and/or the outer peripheral surfaces of the fixed internal gear and the rotary internal gears are provided with grooves each of which has one end opened at an edge at the side of the space formed between the fixed internal gear and the rotary internal gears and is inclined such that the one end of each groove is disposed at a downstream side of a direction of rotation of the rotary seal members with respect to the other end of the groove.

In this arrangement the sealing mechanism including the rotary seal members perform a sealing action under the dynamic pressure produced in the grooves by rotation of the rotary seal members. As the rotary seal members do not make a mechanical contact with the internal gears, no friction occurs, and a high degree of reliability is ensured without loss in power.

The invention will now be described by way of example, with reference to the accompanying drawings, in which:
Fig. 1 is a longitudinal sectional view of a conventional transmission apparatus;
Fig. 2 is a perspective overall view of a transmission apparatus of a first embodiment of this invention;
Fig. 3 is a longitudinal sectional view of the transmission apparatus according to the first embodiment shown in Fig. 2;
Fig. 4 is a front view of the carrier of the transmission apparatus according to the first embodiment shown in Fig. 2;
Fig. 5 is a longitudinal sectional view of a transmission apparatus of a second embodiment of this invention;
Fig. 6 is a perspective view of the carrier of the transmission apparatus according to the second embodiment shown in Fig. 5;
Fig. 7 is a longitudinal sectional view of a transmission apparatus according to a third embodiment of this invention;
Fig. 8 is a longitudinal sectional view of a transmission apparatus according to a fourth embodiment of this invention;
Fig. 9 is a longitudinal section view of a transmission apparatus according to a fifth embodiment of this invention;
Fig. 10. is a longitudinal sectional view of a transmission apparatus according to a sixth embodiment of this invention;
Fig. 11 is a longitudinal sectional view of a transmission apparatus according to a seventh embodiment of this invention;
Fig. 12 is a longitudinal sectional view of a transmission apparatus according to the eighth embodiment of this invention;
Fig. 13 is a perspective view of the rotary seal member of the transmission apparatus according to the eighth embodiment shown in Fig. 12;
Fig. 14 is an enlarged perspective view of part of the rotary seal member shown in Fig. 13; and
Fig. 15 is a longitudinal sectional view of the transmission apparatus according to the ninth embodiment of this invention.

The embodiments of this invention will be explained with reference to the drawings.

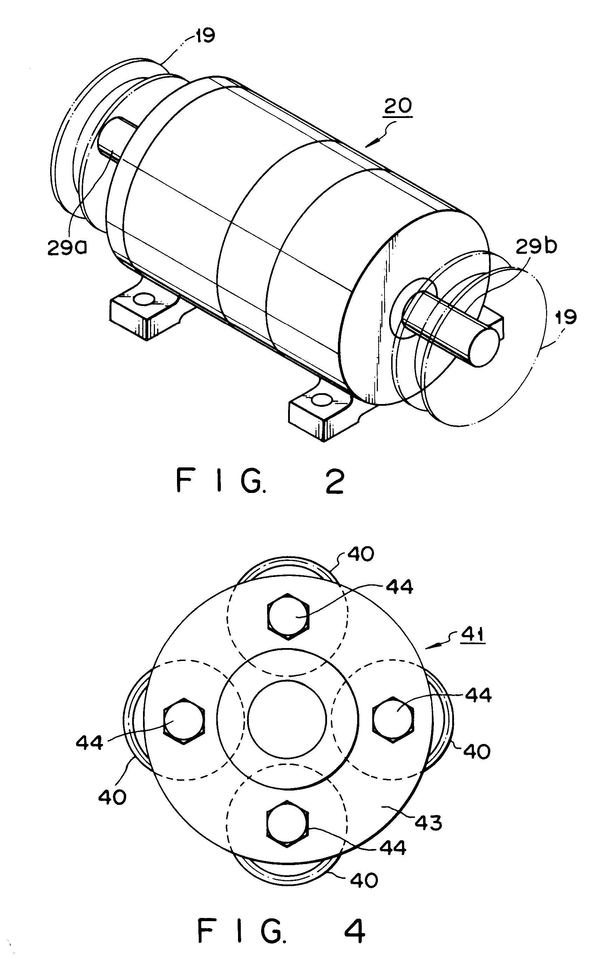

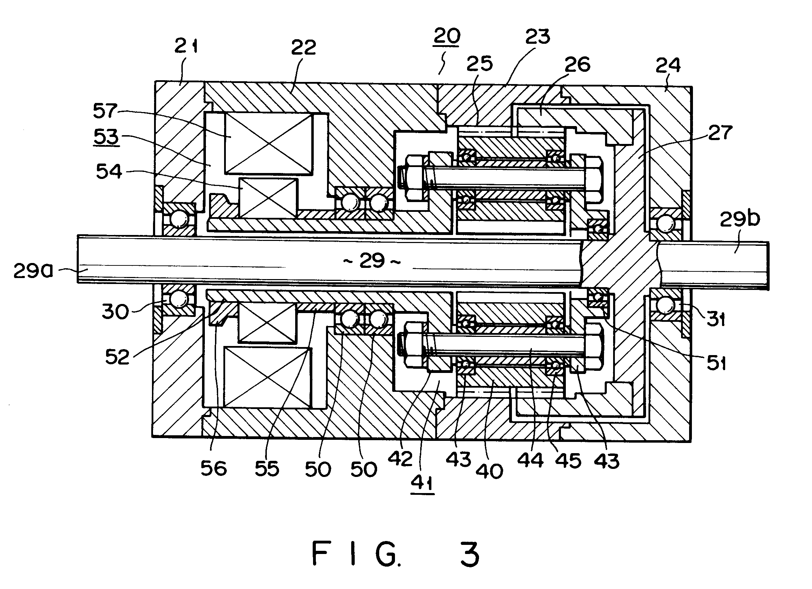

Figs. 2 to 4 show a first embodiment in accordance with the first aspect of the present invention. The transmission apparatus of this embodiment houses a motor and has a low speed shaft, both ends 29a and 29b of which project from both ends of a main body 20 of the apparatus.

The main body 20 constitutes a fixed case of the apparatus and comprises a first flange member 21, a main body portion 22, an intermediate portion 23 and a second flange member 24. The first flange member 21 has a disc shape and forms an end wall of the main body 20. The main body portion 22 is cylindrical and forms a peripheral wall of the main body 20. The second flange member 24 assumes a form of a short blind-ended cylinder and constitutes the other end wall and part of the peripheral wall of the main body 20. A seal for preventing the leakage of lubricant in the main body and other members are provided.

On the inner peripheral face is formed a projection continuously extending in the circumferential direction. A fixed internal gear 25 is formed in the inner peripheral face of the projection. A rotary internal gear 26 is concentrically disposed adjacent to an end of the fixed internal gear 25. The number of teeth of the fixed internal gear 25 is slightly different from that of the rotary internal gear 26. For example, the fixed and rotary internal gears 25 and 26 have 57 teeth and 60 teeth, respectively. The rotary internal gear 26 is supported at the lower speed side by a flange 27 which is fixed to a lower speed shaft 29. The lower speed shaft 29 extends on the central line of the main body 20 and penetrates the central portions of the first and second flange portions 21 and 24 of the main body 20 such that both end potions 29a and 29b project from both ends of the main body 20 and are rotatably supported by bearings 30 and 31. The bearings 30 and 31 are fixedly mounted on the first and second flange portions 21 and 24 so as to be separated from each other at a maximum distance.

In the main body 20 are arranged, for example, four planetary gears 40 which are disposed equidistantly in the circumferential direction and are in mesh with the fixed and rotary internal gears 25 and 26. In this embodiment, each planetary gear 40 has 21 teeth.

The planetary gears 40 are supported by a carrier 41 provided coaxially with the fixed and rotary internal gears 25 and 26 so as to rotate around the axes of the fixed and rotary internal gears 25, 26 and their own axes. The carrier 41 comprises a first carrier flange 42 and a second carrier flange 43 which are placed on the respective ends of the planetary gears 40. The carrier flanges 42 and 43 and the planetary gears 40 are assembled in a body by means of four bolts 44 which also act as supporting shafts for rotatably supporting the planetary gears 40 via bearings 45. Each of the carrier flanges 42 and 43 is formed at the central portion thereof with a circular hole so as to render the carrier 41 hollow.

A hollow high speed shaft 52 is integral with the first carrier flange 42 and axially projects from the central portion thereof. The intermediate portion of the high speed shaft 52 is rotatably supported by two bearings 50 on the main body portion 22 of the main body 20. The second carrier flange 43 of the carrier 41 is supported by a bearing 51 on the low speed shaft 29.

The low speed shaft 29 penetrates the hollow carrier 41 and the hollow high speed shaft 52 and projects from both the end faces of the main body 20 as described above.

In the main body portion 22 of the main body 20 is housed a power source such as a motor 53 arranged coaxially with the high speed shaft 52. The stator 57 of the motor 53 is fixed to the main body portion 22 and the rotor 54 thereof is firmly mounted on the high speed shaft 52 by means of a sleeve 55 and a fixture 56.

The gear mechanism of the reduction apparatus is a type of a planetary gear mechanism called Ferguson's mechanical paradox. As the high speed shaft 52 and the carrier 41 are rotated by the motor 53, the planetary gears 40 revolves around the axes of the fixed and rotary internal gears 25 and 26 the low speed shaft 29 and their own axes. The rotary internal gear 26 is turned at a low speed. The rotation thereof is transmitted to the external load through the slow speed shaft 20. In this embodiment, the reduction ratio of the gear mechanism is 20, and the low speed shaft 52 rotates at a speed of 200 rpm when the high speed shaft 52 is driven at a speed of 4,000 rpm.

Since the carrier 41 is directly driven by the high speed shaft 52, no sun gear is required. The hollow structure of the carrier 41 and the high speed shaft 52 allows the low speed shaft 52 to pass therethrough so as to project it from both ends of the main body. The distance between the bearings 30 for supporting both ends portions of the low speed shaft 29 is made large, leading to an advantageous supporting structure of the low speed shaft.

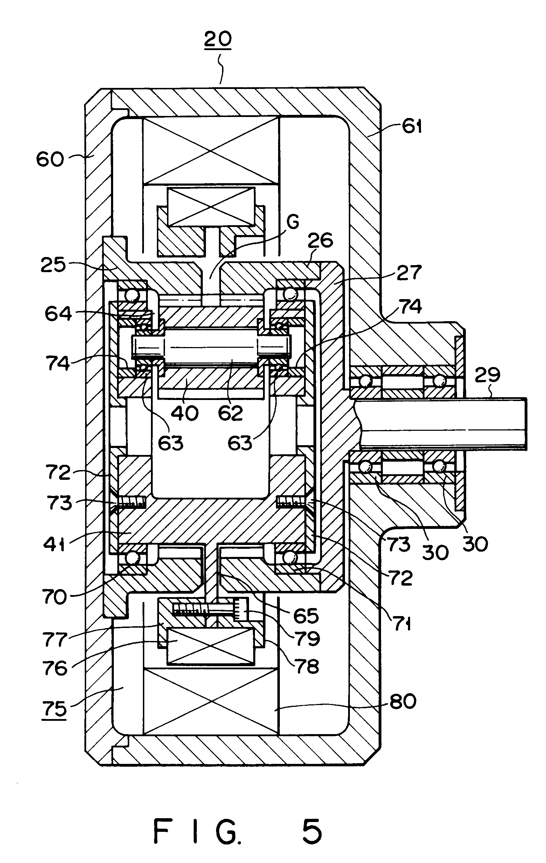

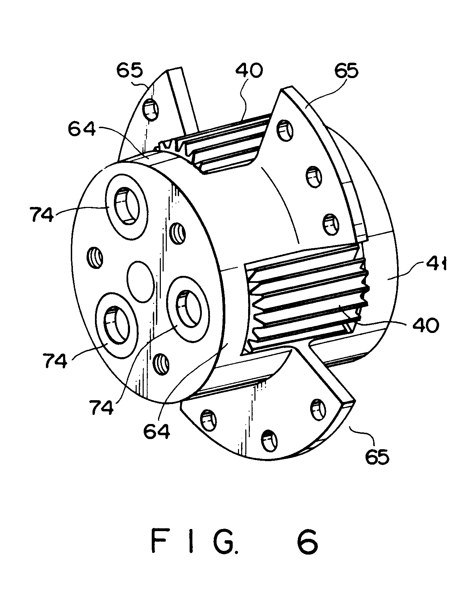

Figs. 5 and 6 show a second embodiment in accordance with the second aspect of the present invention. The reduction apparatus houses a motor as a power source. The motor is provided coaxially with and at the outside of the gear mechanism to reduce the size of the overall apparatus. As the structure of the main parts of this embodiment are similar to those of the first embodiments, the parts of the apparatus shown Fig. 5 which correspond to those of the first embodiment are designated by the same reference numerals, the description thereof being omitted.

The casing, that is, the main body 20 of the second embodiment has a relatively large diameter and a short cylindrical form. It comprises a flange portion 60 and a main body portion 61 which are connected together by means of ordinary connecting means to form a unitary structure.

A fixed internal gear 25 is placed in the central portion of the main body 20. The fixed internal gear 25 has a short cylindrical form and is fixed to the flange portion 60 of the main body. A rotary internal gear 26 is coaxially disposed at one end of the fixed internal gear 25 with a space G defined therebetween and is supported by a flange 27 at the low speed side and a low speed shaft 29. The low speed shaft 29 is rotatably supported by two bearings 30 and 31 on the main body portion 61 of the main body 20. Three (for example) planetary gears 40 are provided in the main body so as to engage the fixed and rotary internal gears 25 and 26 and rotate the axes of these internal gears and their own axes. The number of teeth of the fixed internal gear 25, the rotary gear 26 and the planetary gears 40 of this embodiment is the same as those of the first embodiment.

The planetary gears 40 are supported by a carrier 41 which has a hollow cylindrical form as shown in Fig. 6. Each planetary gear 40 is rotatably supported on the carrier 41 by means of a supporting shaft 62 and a bearing 63. To both ends of the carrier 41 are fixed disc-shaped holding plates 72 by which the bearings 63 are held via sleeves 74. The carrier 41 are rotatably supported on the fixed and rotary internal gears 25 and 26 by means of bearings 70 and 71. In the peripheral wall of the carrier 41 are formed openings 64 from which parts of the planetary gears 40 extend radially outwardly and engage the fixed and rotary internal gears 25 and 26. Three sectorial flange portions 65 each having a sectorial plate-like shape extend radially outwardly from the peripheral wall of the carrier 41 and act as high speed transmitting members for transmitting the rotation of the carrier 41. The flange portions 65 project outwardly from the outer peripheral surfaces of the fixed and rotary internal gears 25 and 26 through the space G formed therebetween.

A power source such as a motor 75 is provided between the outer peripheral surfaces of the fixed and rotary internal gears 25 and 26 and the inner peripheral face of the main body 20. The stator 80 of the motor 75 is fixed to the main body portion 61 of the main body 20, and the rotor 76 of the motor 75 is secured to the sectorial flange portions 65 by means of annular fixing members 77 and 78 and bolts 79.

The operation of the second embodiment is similar to that of the first embodiment. In the second embodiment, the high rotational speed rotation members or the sectorial flange portions 65 extend through the space G between the fixed and rotary internal gears 25 and 26 to the outside thereof. When connected to the sectorial flange portions 65, the motor 75 is provided coaxially with and outside of the gear mechanism. Accordingly, the overall apparatus can be made small, and a motor having a large diameter and a large torque can be used.

The motor can be provided externally of the main body 20. In this case, a ring-shaped external gear is fixed to the sectorial flange portions in place of the rotor, and a gear fixed to the rotary shaft of the external motor is made engaged with the external gear.

Since the second embodiment uses the third feature of this invention in which the sectorial flange portions are formed on the outer peripheral surface of the carrier 41 so as to project therefrom and the carrier is driven via these sectorial flange portions, another shaft can be freely placed in the central portion of the carrier 41. Although no shaft is provided there in Fig. 5, various shafts can be disposed in the central portion of the carrier 41 to design various structures of the reduction apparatus as in the following third to fifth embodiments.

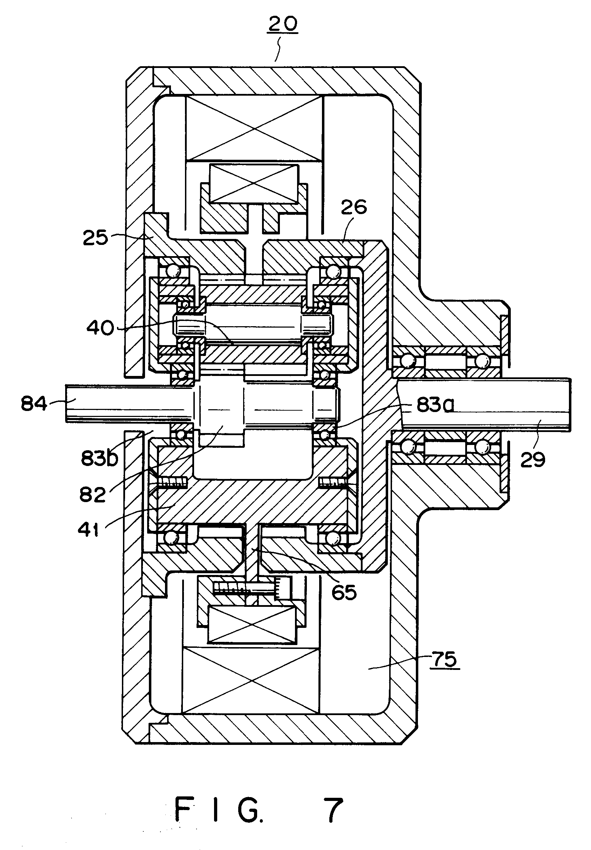

Fig. 7 shows a third embodiment in accordance with the second aspect of this invention which has the same structure as the second embodiment except for the points explained below. In Fig. 7, the portions corresponding to those of the second embodiment are designated by the same reference numerals, the description thereof being omitted. The carrier 41 is hollow and houses a sun gear 82 which the planetary gears 40 engage. To the sun gear 82 is fixed a sun gear shaft 84 rotatably supported on the carrier 41 by means of bearings 83a and 83b and projecting from the end face of the main body 20 opposite to the low speed gear 29. As the carrier is driven, the sun gear shaft 84 is rotated at a gear ratio different from that of the low speed shaft 29.

As apparent from the above description, the sun gear shaft 84 addition to the low speed shaft 29 can be used so as to be connected to another load such as a cooling fan.

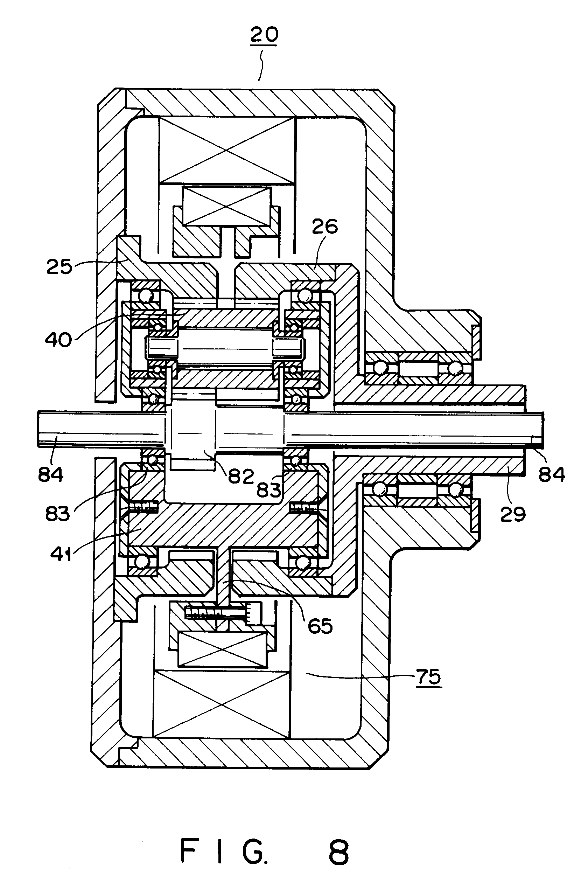

Fig.8 shows a fourth embodiment in accordance with the second aspect of the invention which has the same structure as the third except for the points as described below. The parts in Fig. 8 corresponding to those of the third embodiment are designated by the same reference numerals, the description thereof being omitted. The low speed shaft 29 is made hollow to permit the sun gear shaft 84 to pass therethrough to project from the forward end of the low speed shaft 29.

In the third and fourth embodiments, a third rotary shaft may be provided in place of the sun gear shaft 84, and the third rotary shaft may be directly fixed to the carrier 41. In this case, the rotational speeds of the third rotary shaft and the carrier 41 are naturally the same.

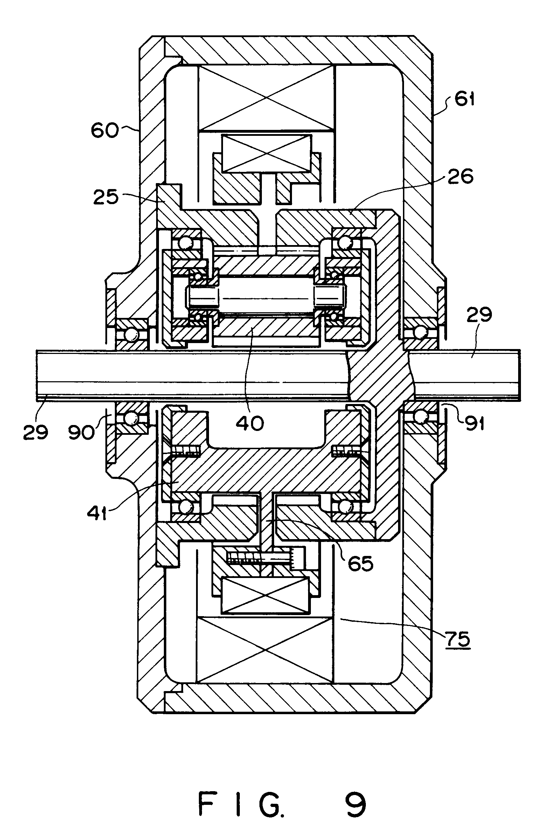

Fig. 9 shows a fifth embodiment in accordance with the second aspect of the invention which has the same structure as the second embodiment except for the points described below. The parts in Fig. 9 corresponding to those of the second embodiment are depicted by the same reference numerals, the description thereof being omitted. The carrier 41 is made hollow. The low speed shaft 29 connected to the rotary internal shaft 26 is extended in both the axial directions so as to pass through the carrier 41 and the flange portion of the main body 20 and project from both end faces of the main body 20. The low speed shaft 29 is rotatably supported by bearings 90 and 91 mounted in the flange portion 60 and the main body portion 61 of the main body 20. This embodiment is constructed according to the first and second features of this invention. The arrangement of the bearings for supporting the carrier 41, the planetary gears 40, the low speed shaft 29 and the like on both sides of the carrier and the gear provides for a reasonable supporting structure.

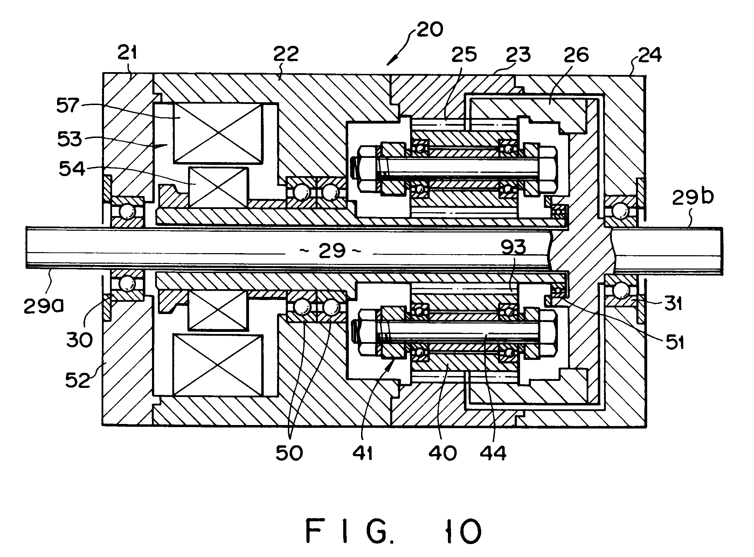

Fig. 10 shows the sixth embodiment in accordance with the first aspect of the pesent invention. This embodiment has the similar structure to the first embodiment except for the points described below. The parts in Fig. 10 corresponding to the first embodiment are designated by the same reference numerals, the description thereof being omitted. In this embodiment, the high speed shaft 52 is not directly connected to the carrier 41 but is extended through the central portion of the carrier 41 and a sun gear 93 which engages the planetary gears 40 is mounted on the extended portion of the high speed shaft. The high speed shaft 52 is rendered hollow to allow the low speed shaft 29 to pass therethrough so that both end portions 29a and 29b of the low speed shaft 29 project from the respective ends of the main body 20. The planetary gears 40 and the carrier 41 are driven via the sun gear 63.

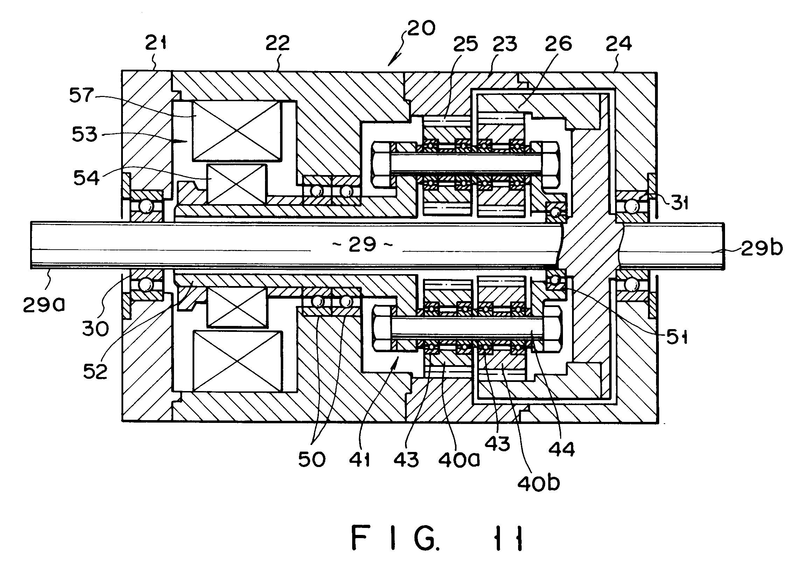

Fig. 11 shows a seventh embodiment according to the first aspect of the present invention. This invention has the same structure as the first embodiment except for the points described below. The parts of this invention corresponding to those of the first embodiment are denoted by the same reference numerals, the description thereof being omitted. The planetary gears are composed of first planetary gears 40a as one group and second planetary gears 40b as the other group. Each pair of the first and second planetary gear 40a and 40b are supported on a respective supporting shaft 44 by means of a bearing 43. The first planetary gears 40a engage the fixed internal gear 25, whereas the second planetary gears 40b mesh with the rotary internal gear 26 such that the gears 40a, 40b, 25 and 26 and the shaft 44 constitute a differential planetary gear mechanism. As shown in this embodiment, the second feature of this invention is applicable to a transmission apparatus using a general planetary gear mechanism.

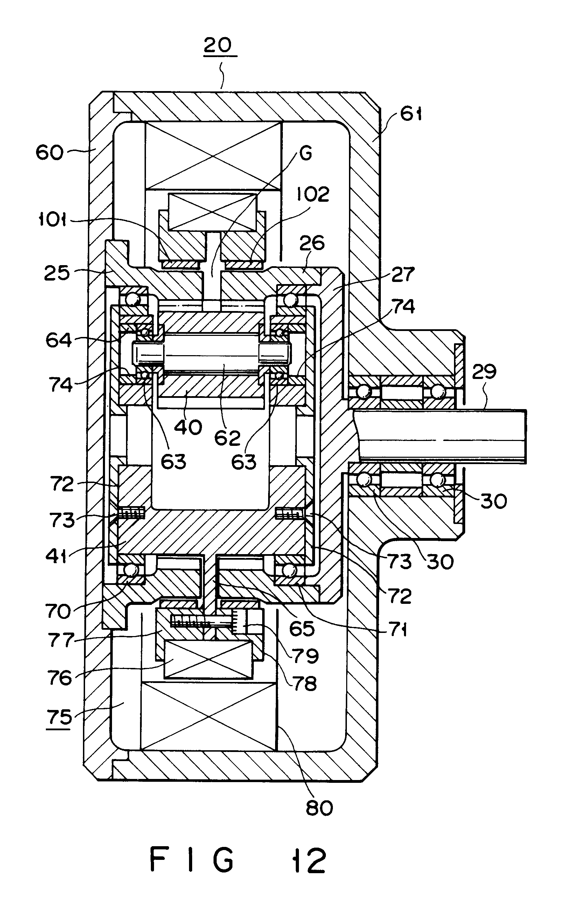

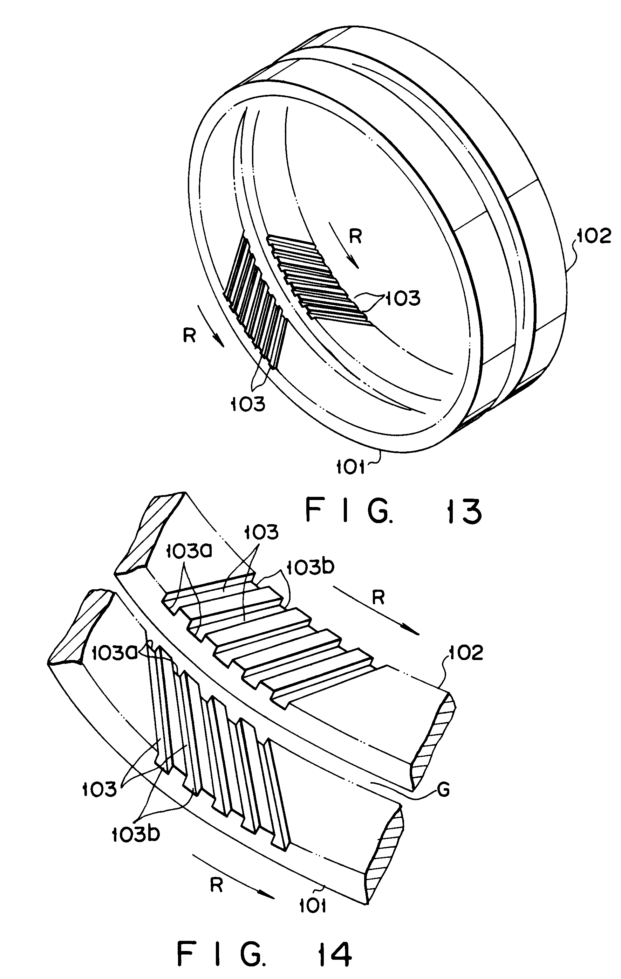

Figs. 12 to 14 show the eighth embodiment in accordance with the second aspect of the present invention.and has many features in common with the second embodiment in Fig.5 except for the parts described below.

Since, as already described, the planetary gears and the carrier are rotated in a high speed in all embodiments, the lubricant in the gear mechanism is splashed outwards by the centrifugal force. Particularly in the second to fifth embodiments as shown in Figs. 5 to 9 which have the sectorial flange portions projecting from the outer peripheral surface of the carrier and extending outwardly through the space formed between the fixed and rotary internal gears, the lubricant in the gear mechanism flows through the space into the space in which the motor is disposed. As a result, the lubricant becomes insufficient in the gear mechanism, leading to a poor lubrication.

To overcome this problem, in the eigth embodiment, annular rotary seal members 101 and 102 are fixed to the inner peripheral faces of the annular fixed members 77 and 78, respectively and rotate together therewith. The inner peripheral faces of the rotary seal members 101 and 102 face the outer peripheral surfaces of the fixed internal gear 25 and the rotary internal gear 26, respectively, in a non-contact state but in a closely disposed state. A plurality of grooves 103 are formed in the inner peripheral faces of the rotary seal members 101 and 102 in an inclined manner with respect to the circumferential direction thereof. One end 103a of each groove 103 opens at the edge portion of the rotary seal member 101 (102) at the side of the space G between the fixed and rotary internal gears 25 and 26, and the other end 103b of each groove 103 opens at the other edge portion of the rotary seal member 101 (102). The grooves 103 are inclined such that the said one end 103a of each groove 103 is disposed at the downstream side of the direction of rotation R of the rotary seal members 101 and 102 with respect to the other end 103b of the same groove 103.

In the eighth embodiment, the rotary seal members 101 and 102 rotate together with the rotor 76. Let it be assumed that the lubricant caused to flow in the space G by the centrifugal force flows out in the grooves 103. As the grooves 103 are inclined as described above, the lubricant flowing in the grooves 103 is more accelerated in the circumferential direction. If the pressure in the space G were higher by the dynamic pressure produced by the increase of the speed than the pressure applied by the centrifugal force, the lubricant would flow in the grooves 103. However, since the pressure in the space G equals the centrifugal force, the lubricant does not flow in the grooves 103. In this respect, the seal mechanism consisting of the rotary seal members 101 and 102 prevents the flowing-out of the lubricant from the space G due to the differential pressure corresponding to the dynamic pressure. Therefore, the lubricant stays in the gear mechanism to lubricate the same. It follows that insufficient lubrication does not occur in the gear mechanism. This seal mechanism operates in a non-contact state, and thus it does not wear or cause the loss of the driving force.

The grooves 103 may be formed in the outer peripheral surfaces of the fixed and rotary internal gears 25 and 26 instead of being formed in the inner peripheral faces of the rotary seal members. Further, the grooves may be formed in the inner peripheral faces of the rotary seal members and the outer peripheral surfaces of the fixed and rotary internal gears.

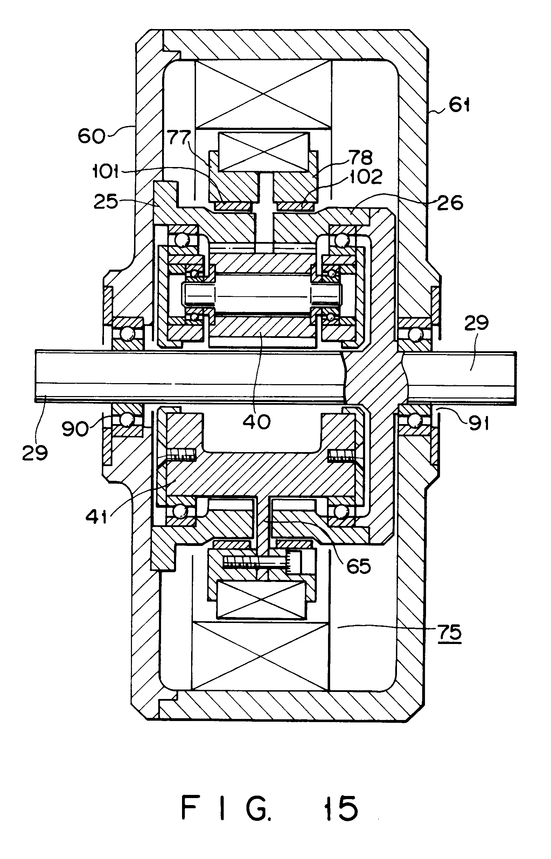

The seal mechanism is applied not only to the eighth embodiment but also to the ninth embodiment which is shown in Fig. 15 and has the structure of the fifth embodiment as shown in Fig. 9 plus the seal mechanism. Of course, the seal mechanism can be applied to the other embodiments and a general transmission apparatus using a planetary gear mechanism.

In the above embodiments, the explanation is made to the reduction apparatuses. When, however, the inputs and outputs are reversed, they are used as speed up apparatuses. Therefore, this invention is applicable to a general transmission apparatus which reduces or increases the rotational speed.

## Claims

1. A transmission apparatus comprising: a main body (20), a fixed internal gear (25) fixed to the main body; a rotary internal gear (26) provided coaxially with and adjacent to the fixed internal gear (25), the rotary internal gear (26) and the fixed internal gear (25) having a different number of teeth, and the rotary internal gear (26) being supported so as to rotate around a central axis thereof which is coaxial with a central axis of the fixed internal gear (25); planetary gears (40) engaging the fixed internal gear (25) and the rotary internal gear (26);
and a hollow carrier (41) for holding the planetary gears (40) so as to rotate around the central axis of the fixed internal gear (25), their own axes being supported so as to rotate around a central axis thereof which is coaxial with the axes of the fixed internal gear (25) and the rotary internal gear (26);
characterised in that:
a hollow high speed shaft (52) is provided for transmitting rotation of the carrier (41), the high speed shaft (52) being coaxial with the carrier (41) and being coupled thereto so as to project from one side thereof, and
a low speed shaft (29) for transmitting rotation of the rotary internal gear (26) is provided coaxially therewith so as to penetrate the hollow carrier (41) and the hollow high speed shaft (52) and project from both end portions of the main body (20); and in that
the transmission apparatus further comprises an electric rotary machine (53) adjacent to and coaxial with the carrier (41), the rotary machine (53) including a rotor (54) attached to the high speed shaft and a stator (57) attached to the main body (20).

2. A transmission apparatus comprising: a main body (20); a fixed internal gear (25) fixed to the main body, a rotary internal gear (26) provided coaxially with and adjacent to the fixed internal gear (25), the rotary internal gear (26) and the fixed internal gear (25) having a different number of teeth, planetary gears (40) engaging the fixed internal gear (25) and the rotary internal gear (26),
the rotary internal gear (26) being supported so as to rotate around a central axis thereof which is coaxial with a central axis of the fixed internal gear (25);
a carrier (41) for holding the planetary gears (40) so as to rotate around the central axis of the fixed internal gear (25) and their own axes being supported so as to rotate around a central axis thereof which is coaxial with the axes of the fixed internal gear (25) and the rotary internal gear (26);
the arrangement being such that a space (G) which is continuous in a circumferential direction is formed between facing end faces of the fixed internal gear (25) and the rotary internal gear (26) characterised in that;
flange-like high rotational speed transmitting members (65) for transmitting rotation of the carrier (41) are provided and extend radially outwardly from an outer peripheral surface of the carrier (41) to radially outwards of the fixed internal gear (25) and the rotary internal gear (26) through the space (G);
a low rotational speed transmitting member (29) is provided for transmitting rotation of the rotary internal gear (26); and in that
the transmission apparatus further comprises an electric rotary machine (75) which is coaxial with and surrounds the fixed internal gear (25) and the rotary internal gear (26), the rotary machine including a rotor (76) attached to the high rotational speed transmitting members (65) and a stator (80) attached to the main body.

3. A transmission apparatus as claimed in claim 2, characterised by further comprising rotary seal members (101, 102) which surround the fixed internal gear (25) and the rotary internal gear (26) and rotate around central axes thereof coaxial with central axes of the fixed internal gear (25) and the rotary internal gear (26).

4. A transmission apparatus as claimed in claim 3, characterised in that inner peripheral faces of the rotary seal members (101, 102) face outer peripheral surfaces of the fixed internal gear (25) and the rotary internal gear (26) at a slight spacing so as to not to contact each other, the inner peripheral faces of the rotary seal members (101, 102) and/or the outer peripheral surfaces of the fixed internal gear (25) and the rotary internal gears (26) are provided with grooves (103) each of which has one end (103a) opened at an edge at the side of the space (G) formed between the fixed internal gear (25) and the rotary internal gears (26) and is inclined such that the one end (103a) of each groove (103) is disposed at a downstream side of a direction of rotation of the rotary seal members (101, 102) with respect to the other end (103b) of the groove (103).

## Patentansprüche

1. Getriebeanordnung, umfassend: einen Hauptkörper (20), eine am Hauptkörper befestigte feste Innenverzahnung (25), eine koaxial und benachbart zur festen Innenverzahnung (25) angeordnete drehbare Innenverzahnung (26), wobei die drehbare Innenverzahnung (26) und die feste Innenverzahnung (25) verschiedene Zähnezahlen aufweisen und die drehbare Innenverzahnung (26) so gelagert ist, daß sie um eine Mittelachse derselben drehbar ist, welche Achse koaxial zu einer Mittelachse der festen Innenverzahnung (25) liegt, mit der festen Innenverzahnung (25) und der drehbaren Innenverzahnung (26) in Eingriff stehende Planeten(zahn)räder (40)
und einen hohlen Träger (41) zum Halten der Planetenräder (40) für Drehung bzw. Umlauf um die Mittelachse der festen Innenverzahnung (25), wobei ihre eigenen Achsen gelagert sind für Drehung um eine Mittelachse davon, die koaxial zu den Achsen der festen Innenverzahnung (25) und der drehbaren Innenverzahnung (26) liegt,
dadurch gekennzeichnet, daß
eine hohle Hochdrehzahlwelle (52) zum Übertragen der Drehung des Trägers (41) vorgesehen ist, wobei die Hochdrehzahlwelle (52) koaxial zum Träger (41) angeordnet und mit diesem so gekoppelt ist, daß sie über eine Seite desselben hinausragt, und
eine Niedrigdrehzahlwelle (29) zum Übertragen der Drehung der drehbaren Innenverzahnung (26) koaxial zu dieser vorgesehen ist, derart, daß sie den hohlen Träger (41) und die hohle Hochdrehzahlwelle (52) durchsetzt und aus beiden Endabschnitten des Hauptkörpers (20) herausragt, und daß
die Getriebeanordnung ferner eine zum Träger (41) benachbart und koaxial angeordnete elektrische Rotationsmaschine (53) umfaßt, welche einen an der Hochdrehzahlwelle angebrachten Rotor (54) und einen am Hauptkörper (20) angebrachten Stator (57) aufweist.

2. Getriebeanordnung, umfassend: einen Hauptkörper (20), eine am Hauptkörper befestigte feste Innenverzahnung (25), eine koaxial und benachbart zur festen Innenverzahnung (25) angeordnete drehbare Innenverzahnung (26), wobei die drehbare Innenverzahnung (26) und die feste Innenverzahnung (25) verschiedene Zähnezahlen aufweisen, mit der festen Innenverzahnung (25) und der drehbaren Innenverzahnung (26) in Eingriff stehende Planeten(zahn)räder (40),
wobei die drehbare Innenverzahnung (26) gelagert ist für Drehung um eine Mittelachse derselben, die koaxial zu einer Mittelachse der festen Innenverzahnung (25) liegt,
einen hohlen Träger (41) zum Halten der Planetenräder (40) für Drehung bzw. Umlauf um die Mittelachse der festen Innenverzahnung (25), wobei ihre eigenen Achsen gelagert sind für Drehung um eine Mittelachse davon, die koaxial zu den Achsen der festen Innenverzahnung (25) und der drehbaren Innenverzahnung (26) liegt,
wobei die Anordnung so getroffen ist, daß ein in Umfangsrichtung fortlaufender (ununterbrochener) Raum (G) zwischen den einander zugewandten Stirnflächen von fester Innenverzahnung (25) und drehbarer Innenverzahnung (26) gebildet ist,
dadurch gekennzeichnet, daß
flanschartige Hochdrehzahlübertragungselemente (65) zum Übertragen der Drehung des Trägers (41) vorgesehen sind und sich von einer Außenumfangsfläche des Trägers (41) durch den Raum (G) radial auswärts zu (einer Stelle) radial auswärts von fester Innenverzahnung (25) und drehbarer Innenverzahnung (26) erstrecken,
ein Niedrigdrehzahlübertragungselement (29) zum Übertragen der Drehung der drehbaren Innenverzahnung (26) vorgesehen ist und daß
die Getriebeanordnung ferner eine elektrische Rotationsmaschine (75) umfaßt, die koaxial zur festen Innenverzahnung (25) und zur drehbaren Innenverzahnung (26) angeordnet ist und diese Innenverzahnungen umgibt, wobei die Rotationsmaschine einen an den Hochdrehzahlübertragungselementen (65) angebrachten Rotor (76) und einen am Hauptkörper angebrachten Stator (80) aufweist.

3. Getriebeanordnung nach Anspruch 2, ferner gekennzeichnet durch drehbare Dichtungselemente (101, 102), welche die feste Innenverzahnung (25) und die drehbare Innenverzahnung (26) umgeben und um Mittelachsen derselben koaxial zu den Mittelachsen von fester Innenverzahnung (25) und drehbarer Innenverzahnung (26) rotieren.

4. Getriebeanordnung nach Anspruch 3, dadurch gekennzeichnet, daß Innenumfangsflächen der drehbaren Dichtungselemente (101, 102) Außenumfangsflächen von fester Innenverzahnung (25) und drehbarer Innenverzahnung (26) mit einem kleinen Abstand dazu zur Vermeidung einer gegenseitigen Berührung zugewandt sind, (und) die Innenumfangsflächen der drehbaren Dichtungselemente (101, 102) und/oder die Außenumfangsflächen der festen Innenverzahnung (25) und der drehbaren Innenverzahnung (26) mit Nuten (103) versehen sind, von denen jede ein Ende (103a), das an einer Kante an der Seite des zwischen fester Innenverzahnung (25) und drehbarer Innenverzahnung (26) gebildeten Raums (G) offen ist bzw. mündet, aufweist und so schräggestellt ist, daß das eine Ende (103a) jeder Nut (103) gegenüber dem anderen Ende (103b) der Nut (103) an einer Stromabseite einer Drehrichtung der drehbaren Dichtungselemente (101, 102) angeordnet ist.

## Revendications

1. Appareil de transmission comprenant: un corps principal (20); un engrenage interne fixe (25) fixé au corps principal; un engrenage interne rotatif (26) prévu coaxialement et en position adjacente à l'engrenage interne fixe (25), l'engrenage interne rotatif (26) et l'engrenage interne fixe (25) possédant un nombre différent de dents, et l'engrenage interne rotatif (26) étant supporté de façon à tourner autour de son axe central qui est coaxial à l'axe central de l'engrenage interne fixe (25); des engrenages planétaires (40) venant s'engrener avec l'engrenage interne fixe (25) et l'engrenage interne rotatif (26);
et un support creux (41) pour maintenir les engrenages planétaires (40) de telle sorte qu'ils tournent autour de l'axe central de l'engrenage interne fixe (25), leurs propres axes étant supportés de façon à tourner autour de leur axe central qui est coaxial aux axes de l'engrenage interne fixe (25) et de l'engrenage interne rotatif (26);
caractérisé en ce que:
un arbre creux (52) à vitesse élevée est prévu pour transmettre la rotation du support (41), l'arbre à vitesse élevée (52) étant coaxial au support (41) et lui étant accouplé de façon à faire saillie par rapport à un côté de ce dernier; et
un arbre à vitesse faible (29) pour transmettre la rotation de l'engrenage interne rotatif (26) est prévu coaxialement à ce dernier de façon à pénétrer dans le support creux (41) et dans l'arbre creux (52) à vitesse élevée et de faire saillie par rapport aux deux portions terminales du corps principal (20); et en ce que
l'appareil de transmission comprend en outre une machine électrique rotative (53) adjacente et coaxiale au support (41) la machine rotative (53) englobant un rotor (54) fixé à l'arbre à vitesse élevée, ainsi qu'un stator (57) fixé au corps principal (20).

2. Appareil de transmission comprenant: un corps principal (20); un engrenage interne fixe (25) fixé au corps principal; un engrenage interne rotatif (26) prévu coaxialement et en position adjacente à l'engrenage interne fixe (25), l'engrenage interne rotatif (26) et l'engrenage interne fixe (25) possédant un nombre différent de dents; des engrenages planétaires (40) venant s'engrener avec l'engrenage interne fixe (25) et l'engrenage interne rotatif (26);
l'engrenage interne rotatif (26) étant supporté de façon à tourner autour de son axe central qui est coaxial à l'axe central de l'engrenage interne fixe (25);
un support (41) pour maintenir les engrenages planétaires (40) de telle sorte qu'ils tournent autour de l'axe central de l'engrenage interne fixe (25), leurs propres axes étant supportés de façon à tourner autour de leur axe central qui est coaxial aux axes de l'engrenage interne fixe (25) et de l'engrenage interne rotatif (26);
l'arrangement étant tel qu'un espace (G) qui est continu en direction circonférentielle est ménagé entre les faces terminales opposées de l'engrenage interne fixe (25) et de l'engrenage interne rotatif (26), caractérisé en ce que:
des éléments (65) en forme de brides transmettant une vitesse de rotation élevée pour transmettre la rotation du support (41) sont prévus et s'étendent radialement vers l'extérieur à partir d'une surface périphérique externe du support (41) radialement à l'extérieur de l'engrenage interne fixe (25) et de l'engrenage interne rotatif (26) à travers l'espace (G);
un élément (29) transmettant une vitesse de rotation faible est prévu pour transmettre la rotation de l'engrenage interne rotatif (26); et en ce que
l'appareil de transmission comprend en outre une machine électrique rotative (75) qui est coaxiale à l'engrenage interne fixe (25) et à l'engrenage interne rotatif (26) tout en les entourant, la machine rotative englobant un rotor (76) fixé aux éléments (65) transmettant une vitesse de rotation élevée, et un stator (80) fixé au corps principal.

3. Appareil de transmission selon la revendication 2, caractérisé par le fait qu'il comprend en outre des éléments de joints étanches rotatifs (101, 102) qui entourent l'engrenage interne fixe (25) et l'engrenage interne rotatif (26) et qui tournent autour de leurs axes centraux coaxiaux aux axes centraux de l'engrenage interne fixe (25) et de l'engrenage interne rotatif (26).

4. Appareil de transmission selon la revendication 3, caractérisé en ce que les faces périphériques internes des éléments de joints étanches rotatifs (101, 102) sont opposées aux surfaces périphériques externes de l'engrenage interne fixe (25) et de l'engrenage interne rotatif (26), un léger écartement étant prévu pour qu'elles ne viennent pas se mettre en contact l'une avec l'autre, les faces périphériques interrnes des éléments de joints étanches rotatifs (101, 102) et/ou les surfaces périphériques externes de l'engrenage interne fixe (25) et de l'engrenage interne rotatif (26) sont munies de rainures (103) dont chacune possède une extrémité (103a) ouverte à un bord du côté de l'espace (G) ménagé entre l'engrenage interne fixe (25) et l'engrenage interne rotatif (26) et est inclinée de telle sorte que la première extrémité (103a) de chaque rainure (103) est disposée du côté aval de la direction de rotation des éléments de joints étanches rotatifs (101, 102) par rapport à l'autre extrémité (103b) de la rainure (103).
